## Europäisches Patentamt

## European Patent Office

## Office européen des brevets

(19)

(11) Veröffentlichungsnummer: **0 113 010**
**B1**

(12) **EUROPÄISCHE PATENTSCHRIFT**

(45) Veröffentlichungstag der Patentschrift:
13.07.88

(51) Int. Cl.⁴: **G 05 B 19/403**

(21) Anmeldenummer: 83111515.9

(22) Anmeldetag: 17.11.83

(54) Robotersteuerung.

(30) Priorität: 30.11.82 DE 3244307

(43) Veröffentlichungstag der Anmeldung:
11.07.84 Patentblatt 84/28

(45) Bekanntmachung des Hinweises auf die Patenterteilung:
13.07.88 Patentblatt 88/28

(84) Benannte Vertragsstaaten:
DE FR GB IT SE

(56) Entgegenhaltungen:
WO - A - 83/01520
GB - A - 2 096 362

IEEE 1981 IECI PROCEEDINGS "APPLICATIONS OF MINI AND MICROCOMPUTERS", 9.-12. November 1981, San Francisco, California (US) G.E. COOK et al.: "Microcomputer control of an adaptive positioning system for robotic arc welding", Seiten 324-329.
SIEMENS POWER ENGINEERING, Band II, Nr. 7, Juli 1980, Berlin (DE) H. BECKER: "ROBOT CONTROL - A Microprocessor Control System for Industrial Robots", Seiten 191-194.
IEEE 1982 IECON PROCEEDINGS, 15.-19. November 1982, Palo Alto, (US) N. KODAIRA et al.: "Microcomputer control of an arc welding robot with visual sensor", Seiten 191-195.

(73) Patentinhaber: **Siemens Aktiengesellschaft Berlin und München, Wittelsbacherplatz 2, D-8000 München 2 (DE)**

(72) Erfinder: **Meier, Christof, Dr., Burgleite 25, D-8551 Heroldsbach (DE)**
Erfinder: **Massat, Hans-Joachim, Rühlstrasse 5, D-8520 Erlangen (DE)**
Erfinder: **Bartelt, Richard, Hartmannstrasse 135, D-8520 Erlangen (DE)**

## Beschreibung

Die Erfindung bezieht sich auf eine Robotersteuerung mit

a) einer Sensorschnittstelle zum Anschluss von den Arbeitsprozess des Roboters überwachenden Sensoren,

b) einer Lageregelung mit Interpolation zum Steuern der Roboterbewegung auf einer vorgegebenen Bahn und

c) einer gesonderten Sensordatenvorverarbeitung zwischen Sensorschnittstelle und Lageregelung.

Robotersteuerungen der vorgenannten Art sind im Prinzip z.B. aus der Zeitschrift Siemens-Energietechnik 1981, Heft 8/9, Seiten 285 bis 289 bekannt.

Bisher besteht im allgemeinen eine feste Zuordnung eines Sensorsignaleinganges zum Systemeingriff. Dabei kann der Systemeingriff, d.h. der Eingriff in die Steuerung eine Bahnkorrektur in eingabeabhängiger fester Korrekturrichtung mit zwei binären Sensorsignalen und Dreipunktschalter sein, es können Geschwindigkeiten in diskreten Stufen geändert oder die gesamte Bewegung angehalten werden. Eine freizügige Kombinierbarkeit von Datenschnittstellen, Signalvorverarbeitungen und Systemreaktion ist im allgemeinen nicht möglich.

Da es für eine Steuerung nicht den Sensor gibt und auch nicht die technische Funktion, sollte ein Gesamtsystem der Sensordatenvorverarbeitung so aufgebaut sein, dass eine flexible Anpassung an die Sensoren und die technologischen Aufgaben möglich ist; d.h. es soll ohne weiteres möglich sein, verschiedene Sensoren über verschiedene Datenschnittstellen – binär, analog, seriell bzw. parallel – anzuschliessen und die Datenvorverarbeitung so zu gestalten, dass frei wählbare technologische Aufgaben, wie Entgraten, Schweissbahnverfolgung, Mehrlagenschweissbahnverfolgungen, Montage usw. ausgeführt werden können.

Die Aufgabe der vorliegenden Erfindung besteht demgemäss darin, eine modulare Sensordatenvorverarbeitung anzugeben, die eine einfache Anpassung zwischen den verschiedensten Sensoren und unterschiedlichsten Technologieaufgaben zulässt.

Diese Aufgabe wird durch das Vorhandensein einer modularen Sensordatenvorverarbeitung mit folgenden Merkmalen gelöst:

d) eine der Sensorschnittstelle nachgeordnete Datenübertragungssteuerung, die selbst aus Modulbausteinen besteht, welche zur Übertragung jeweils unterschiedlicher Sensordaten auf Anforderung oder zyklisch im Interpolationstakt in einen Eingangsspeicher dienen,

e) eine dem Eingangsspeicher nachgeordnete Basisfunktionssteuerung, die selbst aus Modulbausteinen besteht, die zum Vergleich von Sensordaten untereinander oder mit Grenzwerten und zur Abspeicherung der Ergebnisse in einem Binärspeicher und/oder Variablenspeicher dienen,

f) eine nachgeordnete, auf Eingangs- und/oder Binärspeicher und/oder auf den vorverarbeitete Werte enthaltenden Variablenspeicher zugreifende gesonderte Komplexfunktionssteuerung, die selbst aus Modulbausteinen besteht, die zur Geschwindigkeitsführung und Bahnkorrektur in mindestens zwei voneinander unabhängig festlegbaren Richtungen durch entsprechenden Eingriff in die Interpolation dienen und

g) es werden zeitlich aufeinanderfolgend nur diejenigen der vorhandenen Modulbausteine in der Datenübertragungssteuerung, der Basisfunktionssteuerung und der Komplexfunktionssteuerung aufgerufen und aktiviert, die zur Abwicklung des vom Programm vorgegebenen Arbeitsprozesses erforderlich sind.

Die Komplexfunktionssteuerung wird mit Vorteil noch um Bausteine für Playback und Bahnbeschleunigung ergänzt, diejenigen der Basisfunktionssteuerung können mit Vorteil noch folgende Bausteine bzw. Funktionen umfassen: arithmetische Behandlung von Daten, logische Verknüpfung von Daten, nichtlineare Veränderung der Daten, Erkennen von Extrema und Mittelwerten, Mittelwertbildungen, Regelungsfunktionen und Sensorkoordinatentransformationen.

Diese vorgenannte Struktur der Datenverarbeitung bzw. des Aufbaus eines modularen Systems gibt die Möglichkeit, eingehende Sensorsignale taktsynchron zu empfangen und sofort einer Vorverarbeitung zu unterziehen sowie verschiedene freiwählbare Systemreaktionen auszulösen. In der Vorverarbeitung ist es mit Hilfe der Datentransferfunktionssteuerung und von Einfachfunktionen möglich, die Daten zu normieren, eine Nullpunktkorrektur, eine Begrenzung und eine Grenzwertüberwachung vorzunehmen und ferner analoge bzw. digitale Sensorsignale zu filtern. Über die Komplexfunktionen können dann Systemreaktionen hervorgerufen werden, und zwar die dynamische Korrektur einer Bahn in zwei unabhängig voneinander festlegbaren Richtungen mit z.B. kontinuierlicher sensorabhängiger Korrekturgrössenvorgabe, die dynamische und kontinuierliche oder diskrete Beeinflussung der Bahn- bzw. Achsgeschwindigkeiten, eine Playback-Abfahrt ohne Sensoreingriff einer zuvor sensorkorrigierten Bahn oder andere Aufgaben. Das Prinzip des modularen Steuerungsaufbaus ist also so gewählt, dass jeweils durch anwenderspezifische Kombination von Datenschnittstellenauswahl, Datenvorverarbeitung und Systemreaktion die gewünschten technischen Aufgaben, wie z.B. Entgraten, Schweissbahnverfolgungen usw. gelöst werden können.

Anhand einer Zeichnung sei die Erfindung näher erläutert;

es zeigen:

Figur 1 die Systemanbindung der Sensordatenvorverarbeitung an die Robotersteuerung,

Figur 2 die Speicherstruktur der Sensordatenvorverarbeitung,

Figur 3 die Abwicklung des Datentransfers für eine Analogschnittstelle,

Figur 4 eine Bahnverfolgung mit einem Dreipunktsensor,

Figur 5 das Verhalten bei einer Bahnkorrektur mit der geometrischen Summe,

Figur 6 eine Playback-Wiedergabe einer zuvor gespeicherten Bahn,

Figur 7 eine Korrektur der Bahngeschwindigkeit über einen digitalen Dreipunktregler,

Figur 8 eine Geschwindigkeitsreduktion und Bahnverkürzung mit Zweipunktsensor,

Figuren 9 und 10 Ausführungsformen der Datenvorverarbeitung,

Figur 11 das Prinzip der Realisierung von technologischen Funktionen durch den modularen Aufbau der einzelnen Steuerungselemente,

Figur 12 die technologische Funktion des Suchens einer Kante oder eines Objektes,

Figur 13 die Struktur der Sensordatenvorverarbeitung zur Geschwindigkeitsbeeinflussung bei der Entgratung von Schweissnähten,

Figur 14 eine Schweissnahtverfolgung mit zwei Sensorsignalen für unterschiedlich gewählte Korrekturrichtungen und

Figur 15 eine Mehrlagenschweissung mit Playback-Korrektur.

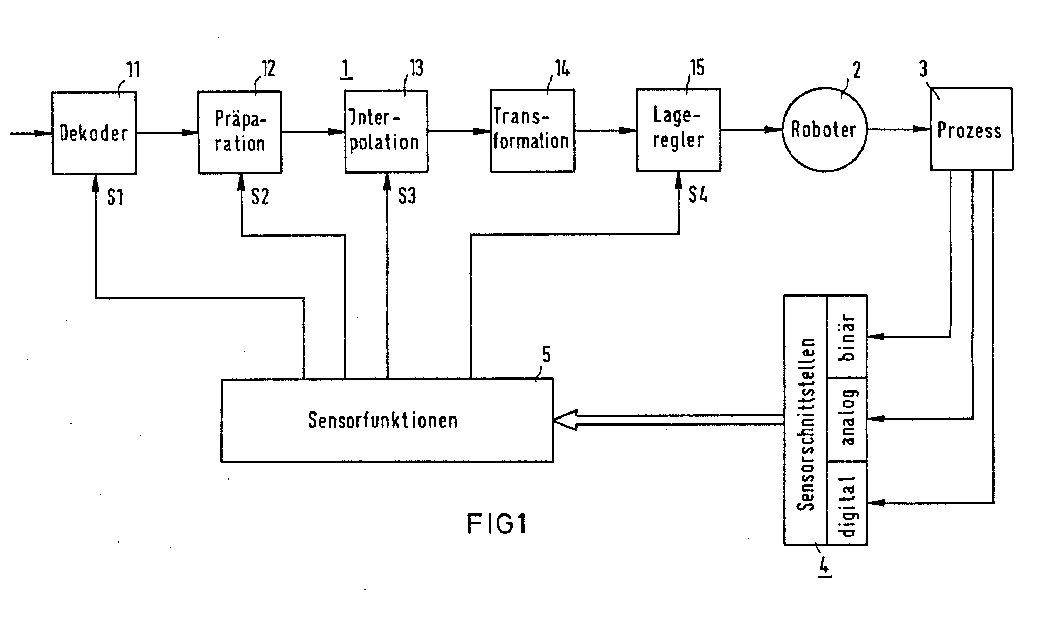

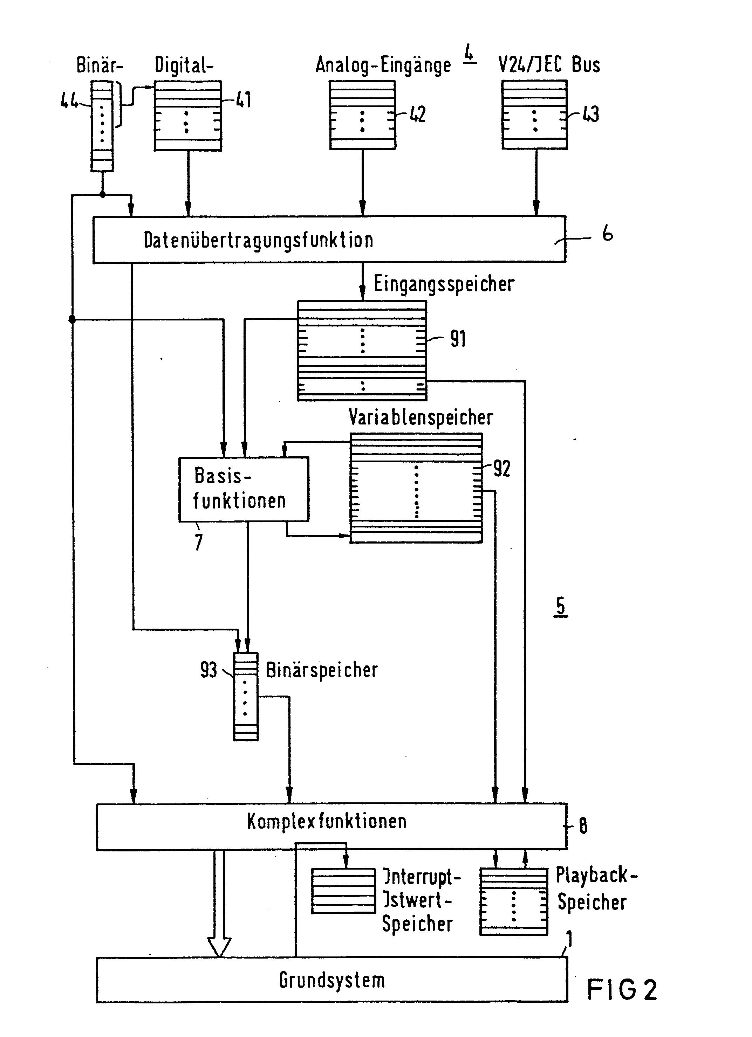

Wie aus Figur 1 ersichtlich, besteht die Grundsteuerung 1 für den Roboter 2 aus einem Decoder 11, der die Anwenderbefehle in maschinenspezifische Signale umsetzt, einer Bewegungsvorbereitung 12, einer Interpolation 13, die aus vorgegebenen Endwerten nach vorgegebenen Funktionen die dazwischenliegenden Werte berechnet, einer Schaltung 14 zur Koordinatentransformation, z.B. von kartesischen in Achskoordination und einen Lagereglerbaustein 15 mit Messsystemen zur Regelung und Führung der Achsen des Roboters 2 auf vorgegebenen Bahnen mit vorgegebenen Geschwindigkeiten. Der Roboter 2 selbst führt einen Arbeitsprozess 3 aus, dies kann z.B. eine Entgratung oder eine Schweissbahnlegung oder die Montage von Werkstückteilen sein. Die bei seinem Arbeitsprozess anfallenden Signale über Lage, Kräfte usw. werden erfasst und als Digital-, Analog- oder Binärsignale über eine Sensorschnittstelle 4 an die Steuerung 1 zurückgemeldet. Damit man flexibel die verschiedensten Sensoren an die verschiedensten technologisch zu lösenden Aufgaben anpassen kann, ist zwischen der Sensorschnittstelle 4 und der Steuerung 1 eine Sensorfunktionsdatenvorverarbeitung 5 mit den Eingriffstellen S1 bis S4 vorgesehen, die modular aufgebaut ist, wie aus Figur 2 näher ersichtlich.

Wie Figur 2 zeigt, hat die Schnittstelle 4 Digitaleingänge 41 zum Anschluss von Digitalsignalen, Analogeingänge 42 zum Anschluss von analogen Sensoren, spezifische Schnittstellen 43, die auf sonstige Bussysteme zugeschnitten sind und Binäreingänge 44. Diesen Eingängen (Eingangspuffern) 41 bis 44 ist in der Schnittstelle als erstes die Datenübertragungssteuerung 6 zugeordnet. Diese Datenübertragungssteuerung 6 hat die Aufgabe, für höhere Sensoren, welche über den Eingang 43 angeschlossen werden, die Datenanforderung, die Datenkanalauswahl, die Datenaufbereitung und die Datenbereitstellung zu übernehmen. Ferner soll diese Steuerung die Schnittstelle programmierbar auf Anforderung oder zyklisch bedienen. Die Datenübertragungsfunktionssteuerung 6 soll ferner die Analogeingänge 42 so bedienen, dass die Analogwerte in Digitalwerte gewandelt werden, und die Daten aufbereitet und im Eingangsspeicher 91 abgespeichert werden. Sinngemäss gilt das gleiche für die Digitaleingänge 41.

Die Datentransferfunktionssteuerung 6 wird entweder systemintern oder mit den erforderlichen Parametern durch gesonderte Programmbefehle gestartet und bedient dann einmalig bei Anforderung oder zyklisch im Interpolationstakt die Schnittstelle mit allen hierfür notwendigen speziellen Schnittstellenfunktionen. Durch die Eingliederung dieser Steuerungsfunktion in das Gesamtsystem wird sichergestellt, dass nachgeschaltete Sensorfunktionen wahlfrei im Eingangsspeicher stets auf die aktuellen – aktuell z.B. vom letzten Interpolationstakt – Daten zurückgreifen können.

Sind die Daten gespeichert, so wird als nächste Funktion die Basisfunktionssteuerung 7 aufgerufen. Diese modular in Bausteine unterteilte Steuerung macht es möglich, vorliegende Daten arithmetisch oder logisch zu verknüpfen, Analogeingangssignale bzw. mehrere Bit breite Teilsignale zu filtern, Grenzwerte abzufragen bzw. Vergleiche durchzuführen, Mittelwerte zu bilden oder Regelfunktionen z.B. P, I oder PI-Verhalten auszuführen, wobei die Arbeitsweise zyklisch im Interpolationstakt ist. Dieser Baustein 7 hat dabei auch noch Zugriff auf den Variablenspeicher 92 und den Binärspeicher 93. Die Ergebnisse dieser Vorverarbeitung werden in diese Speicher 92 bzw. 93 übertragen. Zu diesen hat, ebenso wie zum Eingangsspeicher 91 die Komplexfunktionssteuerung 8 Zugriff. Durch diese Komplexfunktionssteuerung ist – wie späterhin erläutert wird – z.B. eine Geschwindigkeitsführung oder eine Bahnkorrektur über die eigentliche Steuerung 1 möglich.

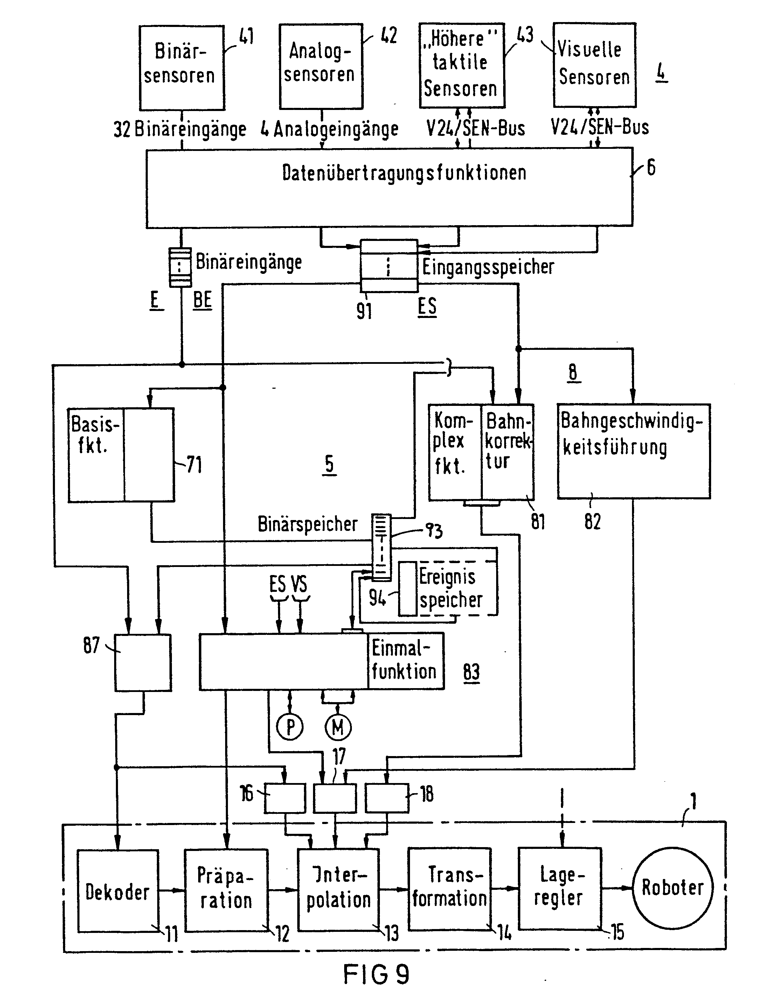

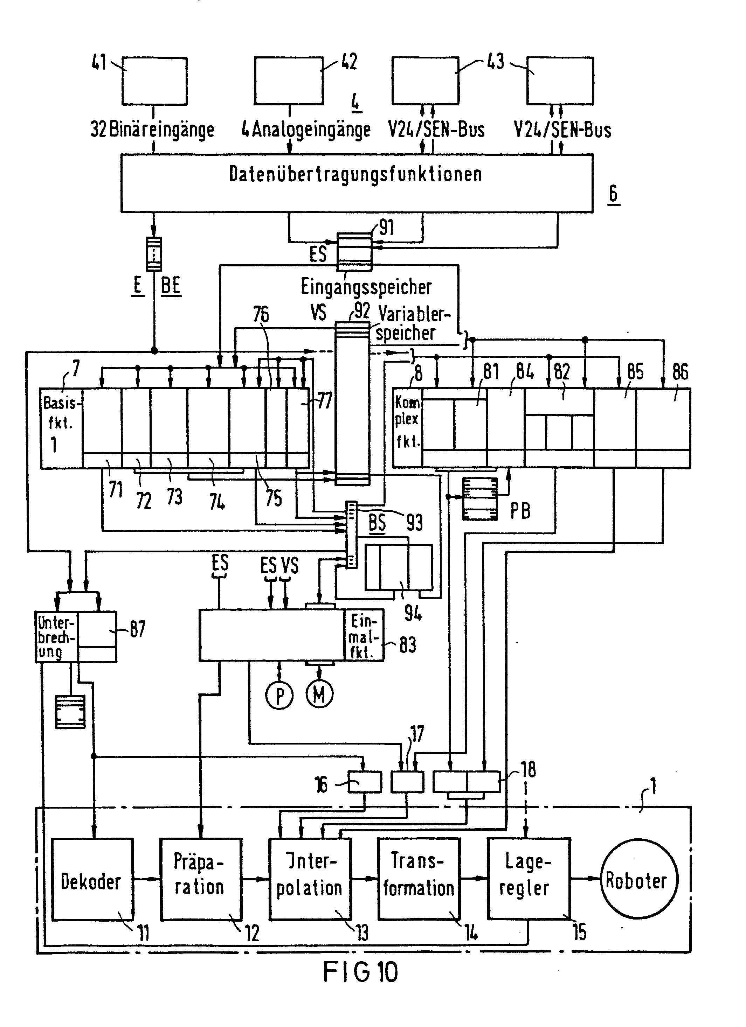

Im einzelnen sind die Funktionen und Bausteine, aus denen sich eine derartige Sensordatenverarbeitung zusammensetzen lässt, näher in den Figuren 9 und 10 angegeben und werden im Zusammenhang damit erläutert.

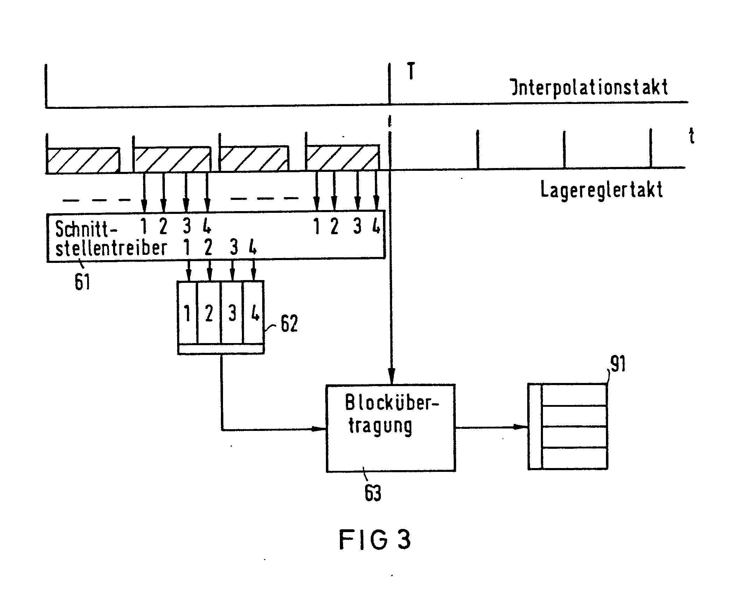

Figur 3 zeigt die Datentransferfunktion für Analogeingänge 42. Dieser Baustein besteht im wesentlichen aus dem Schnittstellentreiber 61, dem Eingangspuffer 62 und der Blockübertragung 63. Der Schnittstellentreiber 61 arbeitet synchronisiert mit dem Lagereglerbaustein 15 der Steuerung 1 (vgl. Fig. 9). Hierdurch entstehen keine Leerzeiten zwischen Analog- und Digitalwandlung und Anstoss und Datenlesevorgang. Der Schnittstellentreiber beschreibt in jedem Lagereglerzyklus den Eingangspuffer 62. Die Blockübertragung 63 arbeitet im Interpolationstakt unmittelbar nach dem Takt T als erste Funktion und überträgt die Daten aus dem Eingangspuffer 63 in den Eingangsspeicher 91. Das vorstehende Beispiel betraf einen der Bausteine der Datentransferfunktion. Weitere Bausteine sind noch für höhere Sensoren, die über eine serielle Schnittstelle oder parallele Schnittstelle bedient werden, vorhanden, und zwar müssen über diese Schnittstelle die Sensordatensteueranweisungen, die Sensordatenleseanweisungen und die Sensordatenanforderungen gegeben werden. Die Sensordatensteueranweisung dient dazu, Steuerkommandos zum Sensor zu übertragen. Die Inhalte dieser Kommandos bzw. Übertragungsprotokolle können entweder im Anwenderbefehl selbst programmiert oder in Anwendertafeln hinterlegt werden. Diese hinterlegten Protokolle dienen dabei einerseits der Steuerung der Schnittstelle selbst mit den notwendigen Steuerkommandos und andererseits den eigentlichen Kommandoübertragungen an den Sensor. Mit der Sensordatenleseanweisung werden Sensordaten eingelesen, welche der Sensor fortlaufend liefert. Das Lesen kann entweder einmalig oder fortlaufend vorgenommen werden. Der Baustein, d.h. die Lesefunktion besteht wie beim analogen Sensor aus zwei Teilen, dem Schnittstellentreiber und der Blocküberragungsfunktion, wobei der Schnittstellentreiber entweder zyklisch oder interruptgesteuert arbeiten kann.

Im nachfolgenden seien nun einige Bausteine der Sensorbasisfunktion näher erläutert:

Durch die Arithmetikfunktion soll in zyklischer Arbeitsweise, und zwar im Interpolationstakt die Grundoperation ermöglicht wrden, dass ein Operand, z.B. eine Variable, entweder mit einer analogen Eingangsgrösse, einer Variablen oder einer Konstanten logisch oder nach arithmetischen Grundrechnungsarten verknüpft werden kann und das Ergebnis wiederum abgespeichert wird.

Durch die Regelungs- und Filterfunktionen sollen Analogeingangssignale bzw. Mehrbit-Digitalsignale Filteroperationen unterworfen werden und Regelungsoperationen ausgeführt werden können. Hierzu wird über einen geeigneten Filteralgorithmus eine Mittelwertbildung über mehrere Abtastwerte eines Èingangssignals vorgenommen und der Mittelwert dann in eine vorgegebene Stelle im Sensordatenspeicher eingeschrieben. Eine Regelungsfunktion, z.B. für einen P-Regler, wird dadurch gebildet, dass als Ausgangswert die Differenz zwischen zwei Eingangswerten, multipliziert mit einem Verstärkungsfaktor, genommen wird. In ähnlicher Weise werden die I und PI-Regelfunktionen ausgeführt.

Zu den Bausteinen der Basisfunktionssteuerung gehören auch die nichtlinearen Funktionen, mit denen verschiedene nichtlineare Kennlinien realisiert werden können: z.B. Betragsfunktion, Diodenfunktion, Begrenzungsfunktion, freiprogrammierbare Kennlinienfunktionen, höhere mathematische Funktionen (z.B. Sinus, Kosinus, e-Funktion usw.).

Die ebenfalls zu diesen Bausteinen gehörende Komparatorfunktion sollte folgende Funktionen möglich machen: Überwachung eines Analogsignals bzw. allgemein eines mehrbitigen Digitalsignals auf zwei programmierbare Grenzwerte, wobei das Ergebnis dann ein logisches Binärsignal ist. Alternativ sollten auch zwei oder mehrere analog bzw. mehrbitige Digitalsignale mit zwei programmierbaren Grenzwerten je Signal und logische Verknüpfung (und/oder) der Einzelergebnisse zu einem logischen Binärsignal ausgewertet werden. Die Vergleichsfunktion soll zwei Operanten miteinander vergleichen und ein binäres Vergleichsergebnis liefern. Die gewünschte Komparatorfunktion wird mit den notwendigen Parametern durch eine vom Anwender vorgegebene Programmierung gestartet und läuft dann zyklisch im Interpolationstakt bis sie durch einen Befehl beendigt wird. Die Eingangsdaten werden vom Eingangsspeicher 91 oder Variablenspeicher 92 gelesen. Das logische Verknüpfungsergebnis wird in den programmierbaren Binärspeicher 93 (Figur 2) geschrieben.

Wesentlich ist als Baustein auch noch eine Speicher- und Zählerfunktion, und zwar soll für die Abfrage zu einem späteren Zeitpunkt registriert werden, ob ein Binärsignal mindestens einmal bzw. wie oft im Beobachtungszeitraum aufgetreten ist. Abhängig von dieser Information können dann beispielsweise Programmverzweigungen initiiert werden (Ereignisspeicher 94 in Fig. 9, 10).

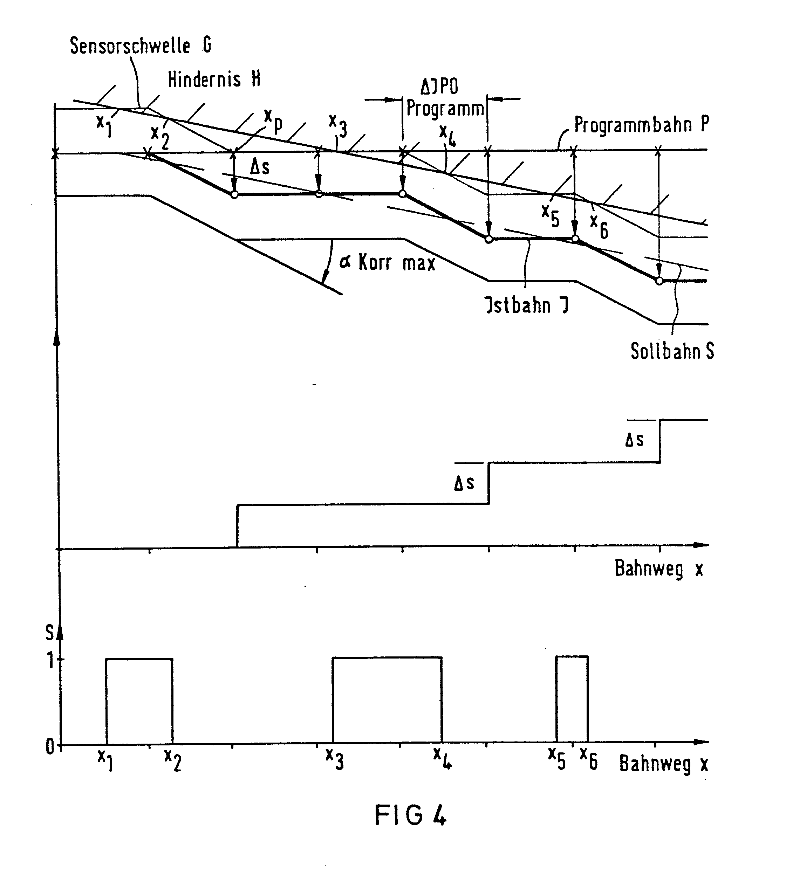

Neben den bisher erwähnten Datenübertragungsfunktionen und Basisfunktionen sind vor allem für die Datenaufbereitung die Komplexfunktionen wesentlich. Hier sei als erstes die Bahnkorrektur bzw. Bahnführung genannt. Der Ausgangspunkt aller Bahnbewegungen stellt die programmierte Bahn, kurz die Programmbahn, dar. Ist das Teil, an dem die Programmbahn abzufahren ist, nicht exakt justiert bzw. ergeben sich am Teil Formabweichungen gegenüber dem Musterteil, so ergibt sich eine Sollbahn S für die gilt, Sollbahn ungleich Programmbahn P (vgl. Figur 4). Die sensorgeführte Bahnverfolgung hat nun die Aufgabe, ausgehend von der Programmbahn P, Korrekturschritte Δ s derart zu erzeugen, dass die tatsächlich sich einstellende Istbahn I um nicht mehr als einen bestimmten Restfehler von der Sollbahn S abweicht. Hierbei wird vorausgesetzt, dass gilt, Programmstartpunkt ist Sollstartpunkt. Wie aus Figur 4a ersichtlich, verläuft dabei die Istbahn I gegenüber der Programmbahn P um einen Korrekturwinkel α verdreht. Der maximale Fangbereich, d.h. der Bereich, an dem ein bestimmter maximaler Restfehler garantiert werden kann, kann für die Sensorkorrektur durch einen maximalen Korrekturwinkel α max definiert werden. Die möglichen Sensorkorrekturrichtungen lassen sich dabei ausgehend von der Stellung des Werzeugs zur Programmbahn definieren, und zwar unterscheidet man Korrekturen in Richtung der Normalen, der Binormalen und Tangenten. In Normalrichtung wird normalerweise eine Bahnkorrektur im eigentlichen Rechts-Links-Sinne vorgenommen, in der binormalen Richtung wird die Korrektur vorzugsweise zum Ausgleich von Werkzeuglängen, Abweichungen usw. nach oben oder unten vorgenommen. In der Tangentenrichtung kann eine Korrektur zur Beeinflussung von Bahngeschwindigkeiten und Bahnlänge erwünscht sein. Da die Definition der Sensorkorrekturrichtungen auf der relativen Stellung von Werkzeug zur Bahn basiert, ist für die eindeutige Festlegung der Sensorkorrektur im Raum neben der Bahnrichtung die Orientierung des Werkzeugs am Arbeitspunkt mit von Bedeutung. Die gewünschte Korrekturrichtung kann vom Anwender bei der Eingabe des Steuerungsprogramms mit Parametereingabe vorgewählt werden.

Es sei nun die Funktion Bahnverfolgung mit Hilfe eines digitalen Dreipunktsensors näher anhand von Figur 4 erläutert. Es wird im vorliegenden Fall eine Rechts-Links-Korrektur ausgeführt.

Gemäss Figur 4 sei dem Roboter die Programmbahn P in x-Richtung vorgegeben. Es liegt nun ein Hindernis H vor, das von einem Dreipunktsensor erfasst wird, und zwar in der Weise, dass, wenn die Sensorschwelle G überschritten wird, ein Signal s solange abgegeben wird, wie diese Grenze überschritten bleibt. Wird an der Stelle x1 die Sensorschwelle G überschritten, so ergibt sich das Signal s als Sensorsignal. Hierdurch wird ein Korrekturbetrag $\Delta$ s wirksam gemacht, um den die Programmbahn P korrigiert wird, und zwar derart, dass für die Interpolation am Wegpunkt $x_p$ bereits ein Korrekturwert $\Delta$ s berücksichtigt wird. Damit ergibt sich die mit I bezeichnete Istbahn. Da der Sensor an der Stelle x2 das Hindernis wieder verlassen hat, wird keine weitere Korrektur durchgeführt. Erst wenn zwischen x3 und x4 das Hindernis erneut berührt wird, wird für den nächsten Interpolationsschritt erneut eine Korrektur $\Delta$ s vorgenommen. Ähnliches gilt zwischen x5 und x6. Damit ergibt sich insgesamt eine Istbahn I, die nur noch relativ wenig von der idealen Sollbahn S, die aufgrund dieses Hindernisses H erforderlich wird, abweicht. Statt eines Dreipunktsensors kann auch ein analoger Sensor verwendet werden.

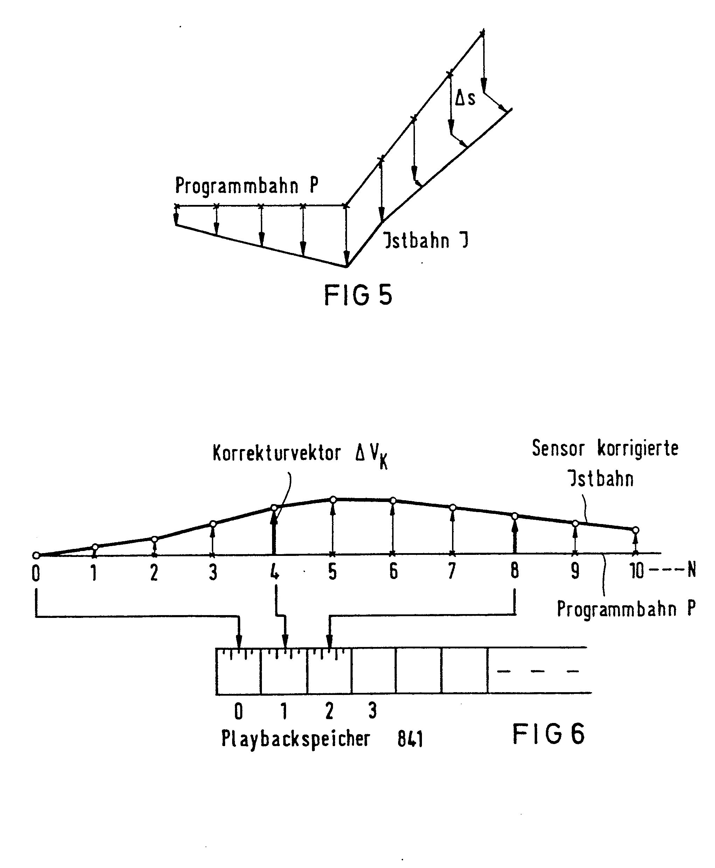

Mit Vorteil werden dabei, wie Figur 5 zeigt, die Korrekturen nicht arithmetisch addiert, sondern jeweils in den kartesischen Koordinaten, d.h. die Gesamtsensorkorrektur ist die geometrische Summe aller Einzelkorrekturen. Damit gibt es keine Geschwindigkeitssprünge an Bahnecken.

Mit Hilfe der Playback-Funktion soll eine einmal mit aktivem Sensor Bahnkorrekturen abgefahrene Bahnfahrt in einer oder mehreren Wiederholungsfahrten ohne aktive Sensordatenkorrektur, aber unter Berücksichtigung der bahnspezifischen Korrekturwerte der ersten Fahrt, abgefahren werden können. Eine derartige Funktion findet Anwendung beim Lichtbogenschweissen, von z.B. V-Nähten in Mehrlagentechnik.

Für die Playback-Korrektur müssen beim erstmaligen Abfahren der Programmbahn die Sensorkorrekturvektoren $\Delta v_K$ in den wegabhängig aktivierten Playback-Speicher 841 übernommen werden. Zur Reduzierung der Datenmenge wird nicht in jedem Interpolationstakt N ein Korrekturvektor gespeichert, sondern z.B. nur in jedem vierten Interpolationstakt. Beim Wiederabfahren der Bahn wird zwischen diesen Korrekturwerten interpoliert (Figur 6).

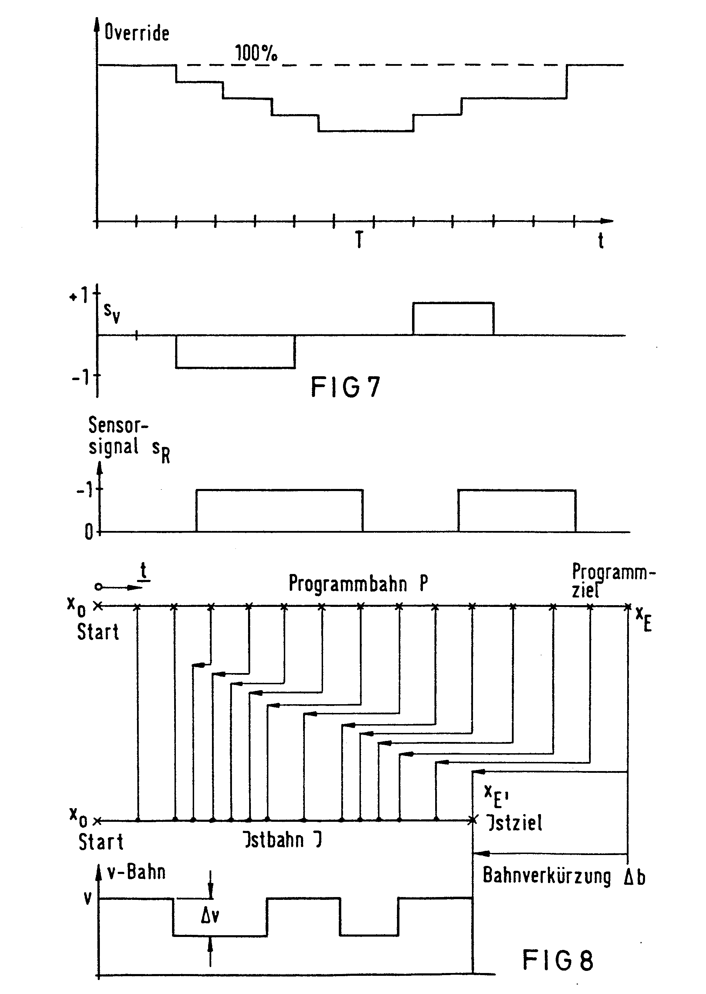

Neben der Komplexfunktion «Bahnkorrektur» ist auch die Funktion «Bahngeschwindigkeitsführung» wesentlich (vgl. Figur 7). Abhängig z.B. vom Signal eines die Geschwindigkeit abtastenden digitalen Dreipunktsensors wird im Takte der Interpolation T die wirksame Geschwindigkeit (Override) treppenförmig geändert. Hierbei bedeuten ein positives Sensorsignal $s_v$ eine Verringerung und ein negatives Sensorsignal $-s_v$ eine Erhöhung der Geschwindigkeit. Analoges gilt für andere Sensortypen.

Neben der Bahngeschwindigkeitsführung ohne Bahnlängenkorrektur ist auch die Bahngeschwindigkeitsführung mit Bahnlängenkorrektur von Interesse. Hier wird ausgehend von einer programmierten Bahn gefordert, dass sensorgeführt eine Bahngeschwindigkeitsreduktion und gleichzeitig eine Bahnverkürzung stattfinden soll. Sei z.B. gemäss Figur 8 angenommen, dass die Programmbahn P zwischen xo und xe liegt und dass ein Zweipunktsensor die eine Geschwindigkeitsreduzierung bedeutenden Signale $-s_R$ abgibt, so ergibt sich infolge der hierdurch hervorgerufenen Reduzierung der Geschwindigkeit v um $\Delta v$ eine Istbahn I, die zwischen Start xo und Istziel $x_{E'}$ um den Weg $\Delta b$ verkürzt ist, da infolge der Geschwindigkeitsreduktion in der zur Verfügung stehenden Zeit nicht der ursprünglich programmierte Weg zurückgelegt wird.

Figur 9 zeigt einen Grundaufbau des Systems mit den Speichern 91, 93 und 94. Neben der Datenübertragungsfunktion 6 sind hier als Basisfunktionen 7 die Komparatorfunktion und Vergleichsfunktion 71 genannt. Als Komplexfunktion 8 sind Bahnkorrektur 81 und Bahngeschwindigkeitsführung 82 vorgesehen. Ferner sind noch Einmalfunktionen 83 wie Nullpunktkorrektur, Ladefunktion etc. vorgesehen. Die Komplexfunktion Bahnkorrektur 81 wirkt über ein Speicherglied 18 auf die Interpolation 13 im Sinne einer Änderung der Interpolationsschritte ein. Die Bahngeschwindigkeitsführung 82 wirkt über den Override 17 ebenfalls auf die Interpolation 13, und zwar auf die Geschwindigkeit ein. Die sensorabhängig angeregte Unterbrechungsfunktion 87 kann über das Stoppglied 16 die Interpolation anhalten und über den Decoder 11 Programmverzweigungen usw. einleiten.

Figur 10 zeigt die etwas erweiterte Variante, und zwar umfasst hier die Basisfunktion noch eine arithmetische Funktion 72, eine Regelfunktion 73, eine nichtlineare Kennlinienfunktion 74, logische Verknüpfungen 75 und Sprung- und Ladefunktionen 76 bzw. 77. Die Komplexfunktionen sind noch um Playback-Funktion 84, Bahnbeschleunigungsführung 85 und Geschwindigkeitsführung 86 erweitert.

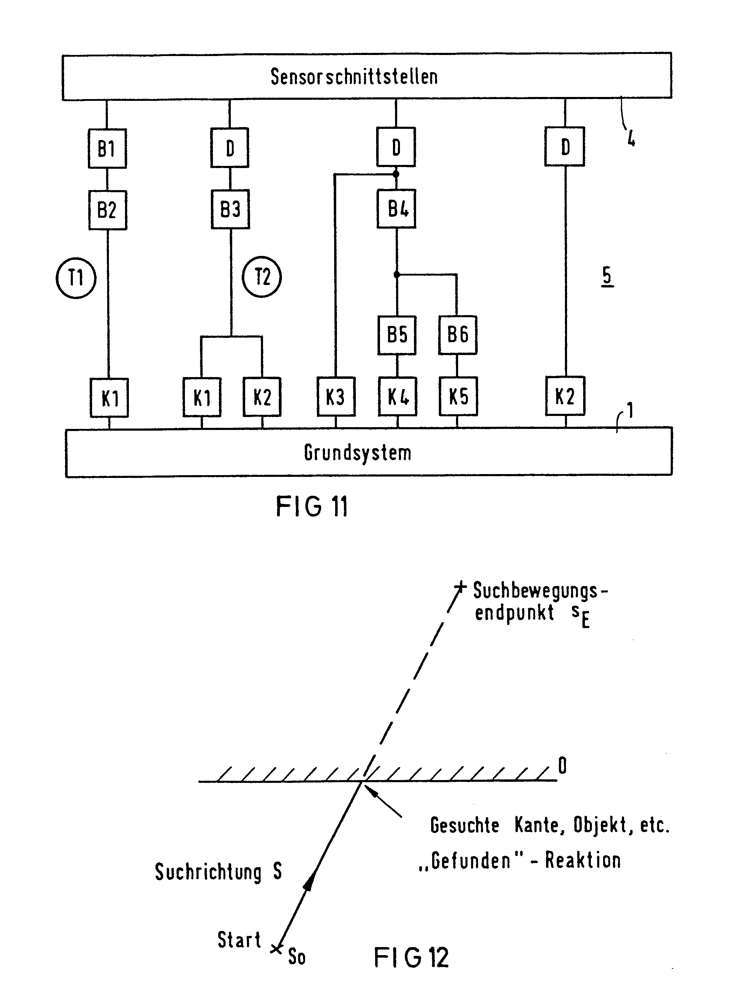

Wie aus Figur 11 ersichtlich, werden zwischen Sensorschnittstelle 4 und Steuerung 1 jeweils gemäss der zu lösenden technologischen Aufgabe nur diejenigen Bausteine D, B, K der Datenvorbereitung 5 aufgerufen, die erforderlich sind. So sind z.B. zum Lösen der technologischen Aufgage T1 die Basisfunktion B1 und B2 und die Komplexfunktion K1 erforderlich. Dagegen beim Lösen der Aufgabe T2 die Datenübertragungsfunktion D, die Einfachfunktion B3 und parallel die beiden Komplexfunktionen K1 und K2. Sinngemäss das gleiche gilt für die übrigen dargestellten Beispiele. Auf diese Weise können die verschiedenartigsten Sensoren zur Lösung der unterschiedlichsten technischen Aufgaben jeweils mit der Steuerung so verbunden werden, dass sich jeweils eine optimale Anpassung ergibt.

Figur 12 zeigt eine zu lösende technische Aufgabe, und zwar die Suche einer Kante oder eines Objektes O. Vom Start So fährt der Roboter mit vorgegebener Suchrichtung S auf die gesuchte Kante. Beim Erreichen dieser Kante spricht der Sensor an und gibt je nach Art ein entsprechendes binäres oder analoges Ausgangssignal ab. Ist bis zum Suchendpunkt $s_E$ diese Kante nicht gefunden, wie gestrichelt angedeutet, so wird eine Nichtgefunden-Meldung abgegeben. Zur Lösung dieser technischen Funktion oder Aufgabe wird also nur eine Einfachfunktion benötigt, und zwar Grenzwert erreicht oder nicht.

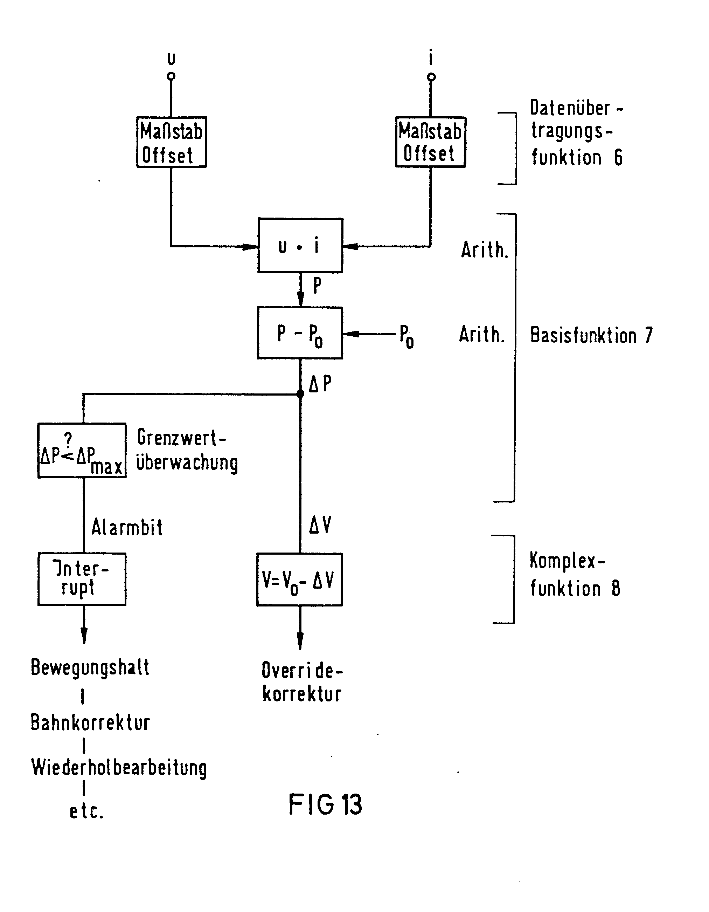

Figur 13 zeigt die Entgratfunktion mit Geschwindigkeitsbeeinflussung und Grenzüberwachung. Hier sind zur Lösung der technologischen Funktion neben der Datenübertragungsfunktion 6, mit der Nullpunktverschiebung und Datenaufnahme vorgenommen werden, noch Basisfunktion 7 und Komplexfunktion 8 erforderlich. Zunächst wird bei den Basisfunktionen die arithmetische Funktion der Multiplikation aufgerufen, und zwar die Bildung der Leistung P aus Spannung u und Strom i. Als nächstes wird wieder eine arithmetische Funktion benötigt, und zwar die Differenz zwischen einem vorgegebenen Wert $P_o$ und dem Istwert P. Die sich ergebende Differenz $\Delta P$ wird auf Grenzwert überwacht und falls notwendig normiert und nichtlinear verknüpft. Stellt sich ein Überschreiten eines Grenzwertes heraus, so wird über ein Alarmbit sofort eine Interruptfunktion aufgerufen, die geeignete Gegenmassnahmen einleitet, z.B. über den Decoder 11 einen anderen Programmteil aufruft. Zusätzlich wird, abhängig von $\Delta p$ durch die Komplexfunktion Geschwindigkeitsführung 82 die vorgegebene Geschwindigkeit $v_o$ um den von $\Delta p$ abhängigen Wert $\Delta v$ reduziert, und war als Override-Korrektur, so dass sich die Geschwindigkeit v ergibt.

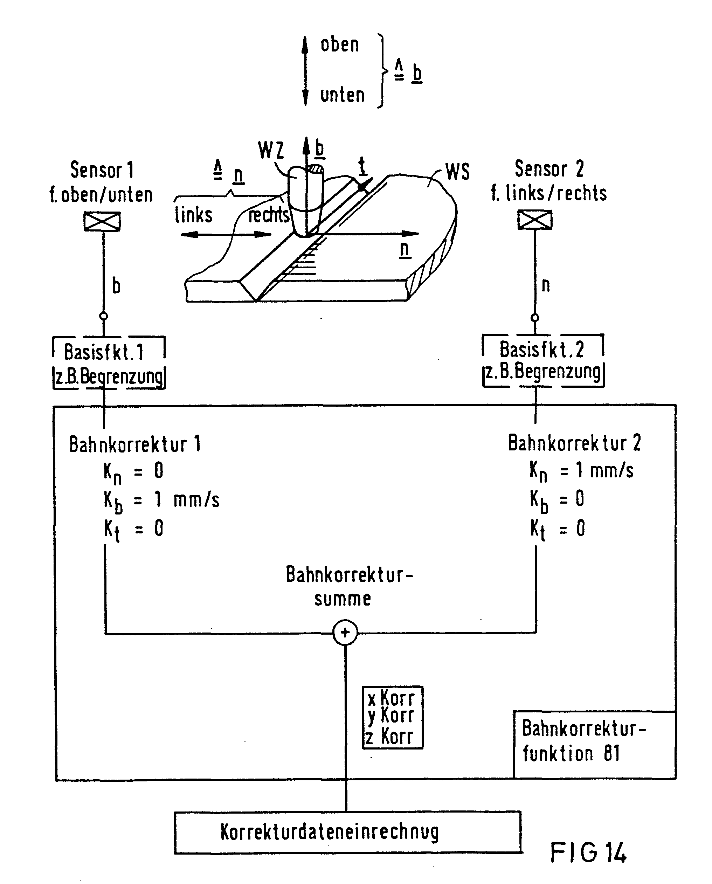

Figur 14 zeigt eine Schweissnahtverfolgung, mit zwei Sensorsignalen für die Korrekturrichtungen Links - Rechts ≙ n und Oben - Unten ≙ b. Beiden Sensorsignalen n und b ist zunächst eine Basisfunktion z.B. Begrenzung 711 zugeordnet. Die Bahnkorrekturfunktion 81 in den Komplexfunktionen 8 bildet aus den beiden Sensorsignalen nach vorgegebenen Kriterien jeweils die Korrekturwerte für die ausgewählten Richtungen. Die Bahnkorrektursumme wird dann zur Korrekturdateneinrechnung und entsprechenden Beeinflussung der Interpolation 13 benutzt.

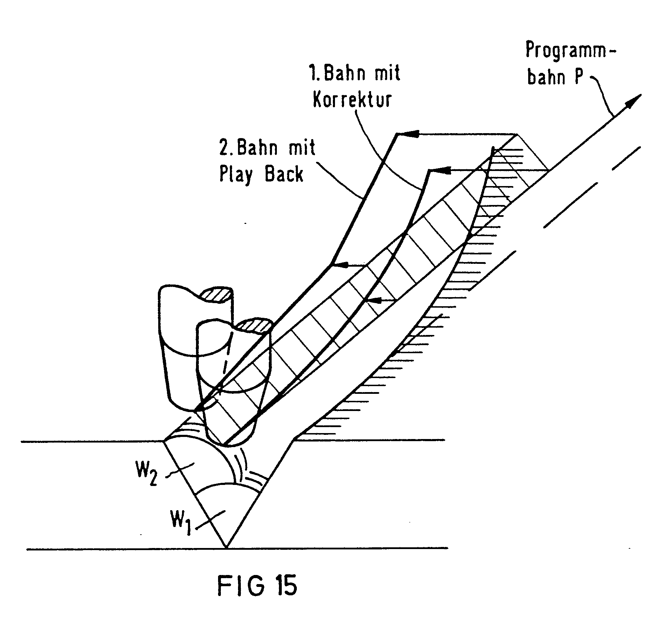

Figur 15 zeigt die Mehrlagenschweissung mit Playback-Korrektur, und zwar wird bei einer vorgegebenen Programmbahn P die erste Wurzelnaht $w_1$ mit aktiver Sensorkorrektur und Playback-Speicherung abgefahren. Die Decknähte $w_2$ werden dann im Playback-Verfahren mit Linearinterpolation abgefahren.

## Patentansprüche

1. Robotersteuerung mit

a) einer Sensorschnittstelle (4) zum Anschluss von den Arbeitsprozess des Roboters überwachenden Sensoren,

b) einer Lageregelung (1) mit Interpolation (13) zum Steuern der Roboterbewegung auf einer vorgegebenen Bahn und

c) einer gesonderten Sensordatenvorverarbeitung (5) zwischen Sensorschnittstelle (4) und Lageregelung, gekennzeichnet durch das Vorhandensein einer modularen Sensordatenvorverarbeitung mit folgenden Merkmalen:

d) eine der Sensorschnittstelle (4) nachgeordnete Datenübertragungssteuerung (6), die selbst aus Modulbausteinen besteht, welche zur Übertragung jeweils unterschiedlicher Sensordaten auf Anforderung oder zyklisch im Interpolationstakt in einen Eingangsspeicher (91) dienen,

e) eine dem Eingangsspeicher (91) nachgeordnete Basisfunktionssteuerung (7), die selbst aus Modulbausteinen besteht, die zum Vergleich von Sensordaten untereinander oder mit Grenzwerten und zur Abspeicherung der Ergebnisse in dem Binärspeicher (93) und/oder Variablenspeicher (92) dienen,

f) eine nachgeordnete, auf Eingangs- und/oder Binärspeicher und/oder auf den vorverarbeitete Werte enthaltenden Variablenspeicher (92) zugreifende gesonderte Komplexfunktionssteuerung (8), die selbst aus Modulbausteinen besteht, die zur Geschwindigkeitsführung und Bahnkorrektur in mindestens zwei voneinander unabhängig festlegbaren Richtungen durch entsprechenden Eingriff in die Interpolation (13) dienen und

g) es werden zeitlich aufeinanderfolgend nur diejenigen der vorhandenen Modulbausteine in der Datenübertragungssteuerung (6), der Basisfunktionssteuerung (7) und der Komplexfunktionssteuerung (8) aufgerufen und aktiviert, die zur Abwicklung des vom Programm vorgegebenen Arbeitsprozesses erforderlich sind.

2. Steuerung nach Anspruch 1, dadurch gekennzeichnet, dass die Komplexfunktionssteuerung (8) zusätzlich folgende Bausteine umfasst:

a) Playback-Funktion (84) und

b) Bahnbeschleunigungsfunktion (85).

3. Steuerung nach Anspruch 1, dadurch gekennzeichnet, dass die Basisfunktionssteuerung zusätzlich folgende Bausteine umfasst:

a) Arithmetikfunktion (72),

b) Verknüpfungsfunktion (75),

c) nichtlineare Funktionen (74),

d) Extrem- und Mittelwertfunktionen,

e) Regelungsfunktion (73) und

f) Sensorkoordinaten-Transformation.

4. Steuerung nach Anspruch 1, dadurch gekennzeichnet, dass die Datenübertragungssteuerung (6) für analoge Eingänge aus einem in jedem Lagereglerzyklus einen Eingangspufferspeicher (62) beschreibenden Schnittstellentreiber (61) und einen im Interpolationstakt arbeitenden Blockübertragungsglied (63) besteht, das die Daten aus dem Eingangspufferspeicher (62) in einen Eingangsspeicher (91) überträgt.

5. Steuerung nach Anspruch 1, dadurch gekennzeichnet, dass sensorabhängige Programmverzweigungen aufrufbar, Programmunterbrechungen einleitbar und/oder Programmparameter veränderbar sind.

## Claims

1. A robot control with
   a) a sensor interface (4) for connecting sensors monitoring the operating process of the robot,
   b) a position control (1) with interpolation (13) for controlling the movement of the robot on a preselected path and
   c) a separate sensor data preprocessor (5) between the sensor interface (4) and position control,
characterised by the presence of a modular sensor data preprocessor with the following features:
   d) a data transmission control (6), arranged after the sensor interface (4), which itself comprises modular units serving to transmit respective different sensor data on command or cyclically in the interpolation cycle to an input store (91),
   e) a basic function control (7), arranged after the input store (19), which itself comprises modular units serving to compare sensor data with one another or with limiting values and to store the results in a binary store (93) and/or a variable store (92),
   f) a subsequent, separate complex function control (8) accessing the input and/or binary store and/or the variable store (92) containing preprocessed values, which itself comprises modular units serving for velocity control and path correction in at least two directions which can be fixed independently of one another by corresponding intervention in the interpolation (13) and
   g) only those of the modular units present in the data transmission control (6), the basic function control (7) and the complex function control (8) which are necessary for the control of the operating process preselected by the program are initiated and activated in chronological sequence.

2. A control according to claim 1, characterised in that the complex function control (8) additionally includes the following modules:
   a) a playback function (84) and
   b) a path acceleration function (85).

3. A control according to claim 1, characterised in that the basic function control additionally includes the following modules:
   a) an arithmetic function (72),
   b) a logic function (75),
   c) non-linear functions (74),
   d) extreme and mean value functions,
   e) a control function (73) and
   f) sensor coordinate transformation.

4. A control according to claim 1, characterised in that the data transmission control (6) for analog inputs comprises an interface driver (61) writing into an input buffer store (62) in each position controller cycle and a block transmission member (63), operating in the interpolation cycle, which transfers the data from the input buffer store (62) to an input store (91).

5. A control according to claim 1, characterised in that sensor dependant program branchings can be initiated, program interruptions can be initiated and/or program parameters can be altered.

## Revendications

1. Dispositif de commande d'un robot, comportant,
   a) une interface (4) de liaison à des capteurs, pour le raccordement de capteurs contrôlant le processus de travail du robot,
   b) un dispositif (1) de régulation de position muni d'un dispositif d'interpolation (13) pour la commande du déplacement du robot sur une trajectoire prédéterminée, et
   c) un dispositif particulier (5) de traitements préalable des données des capteurs, disposé entre l'interface (4) de liaison avec les capteurs et le dispositif de régulation de position,
caractérisé par le fait qu'il est prévu un dispositif modulaire de traitement préalable des données des capteurs présentant les caractéristiques suivantes:
   d) un dispositif (6) de transmission de données, qui est installé en aval de l'interface (4) de liaison avec les capteurs et est constitué lui-même par des composants modulaires qui servent à la transmission de différentes données respectives des capteurs dans une mémoire d'entrée (91), sur demande ou bien cycliquement, à la cadence d'interpolation,
   e) un dispositif (7) de commande de fonctions de base, qui est branché en aval de la mémoire d'entrée (91) et est lui-même constitué par des composants modulaires qui servent à comparer des données des capteurs entre elles ou à des valeurs limites ou à mémoriser les résultats dans une mémoire binaire (93) et/ou dans une mémoire de variables (92),
   f) un dispositif particulier (8) de commande de fonctions complexes, qui agit sur la mémoire d'entrée et/ou la mémoire binaire et/ou sur la mémoire de variables 92 contenant les valeurs préalablement traitées, et est constitué lui-même par des composants modulaires, qui sont utilisés pour réaliser un pilotage de la vitesse et une correction de trajectoire dans au moins deux directions pouvant être déterminées indépendamment l'une de l'autre, grâce à l'action correspondante appliquée au dispositif d'interpolation (13), et
   g) seuls les composants modulaires présents dans le dispositif (6) de commande de transmission de données, le dispositif (7) de commande des fonctions de base et le dispositif (8) de commande des fonctions complexes et qui sont nécessaires pour l'exécution du processus de travail prédéterminé par le programme, sont appelés et activés les uns après les autres dans le temps.

2. Dispositif de commande suivant la revendication 1, caractérisé par le fait que le dispositif (8) de commande des fonctions complexes comporte en outre les modules suivants:

a) fonction de playback (84), et

b) fonctions d'accélération sur la trajectoire (85).

3. Dispositif de commande suivant la revendication 1, caractérisé par le fait que le dispositif de commande des fonctions de base comporte en outre les modules suivants:

a) fonction arithmétique (72),

b) fonction combinatoire (75),

c) fonctions non linéaires (74),

d) fonctions de valeurs extrêmes et de valeurs moyennes,

e) fonction de régulation (73), et

f) transformation de coordonnées des capteurs.

4. Dispositif de commande suivant la revendication 1, caractérisé par le fait que le dispositif (6) de commande de transmission des données est constitué, pour des entrées analogiques, par un étage d'attaque (61) de commande d'interface, qui réalise l'enregistrement dans une mémoire tampon d'entrée (62), lors de chaque cycle de régulation de position, et par un circuit (63) de transmission de blocs, qui travaille à la cadence d'interpolation et transmet les données depuis la mémoire tampon d'entrée (62) dans une mémoire d'entrée (91).

5. Dispositif de commande suivant la revendication 1, caractérisé par le fait que des embranchements de programmes dépendant des capteurs peuvent être appelés, que des interruptions de programmes peuvent être déclenchés et/ou que les paramètres des programmes peuvent être modifiés.

FIG1

FIG 2

T

Interpolationstakt

t

Lagereglertakt

Schnittstellentreiber    1 2 3 4        1 2 3 4
                  1 2  3 4
61

1 2 3 4  62

Blockübertragung

91

63

FIG 3

FIG 4

Programmbahn P

Δs

Jstbahn J

## FIG 5

Korrekturvektor ΔV_K

Sensor korrigierte Jstbahn

0   1   2   3   4   5   6   7   8   9   10 ---N

Programmbahn P

0   1   2   3

Playbackspeicher   841

## FIG 6

Override

100%

T

t

$+1$

$s_V$

$-1$

FIG 7

Sensorsignal $s_R$

$-1$

0

t

Programmbahn P

Programmziel

$x_0$

Start

$x_E$

$x_{E'}$

$x_0$

Start

Istbahn J

Istziel

v-Bahn

$\Delta v$

$v$

Bahnverkürzung $\Delta b$

FIG 8

19

FIG 9

FIG 10

FIG 11

Sensorschnittstellen

B1   D   D   D

B2   B3   B4

T1   T2   5

B5   B6

K1   K1   K2   K3   K4   K5   K2   1

Grundsystem

Suchbewegungsendpunkt $s_E$

0

Gesuchte Kante, Objekt, etc.

„Gefunden" - Reaktion

Suchrichtung S

Start   $S_0$

FIG 12

FIG 13

FIG 14

1. Bahn mit Korrektur

2. Bahn mit Play Back

Programm-bahn P

$W_2$

$W_1$

FIG 15